(19) Europäisches Patentamt
European Patent Office
Office européen des brevets

(11) **EP 0 662 621 B1**

(12) **EUROPÄISCHE PATENTSCHRIFT**

(45) Veröffentlichungstag und Bekanntmachung des Hinweises auf die Patenterteilung:
**06.05.1998 Patentblatt 1998/19**

(51) Int Cl.6: **G02B 6/34**, G02F 1/01

(21) Anmeldenummer: **95100086.8**

(22) Anmeldetag: **03.01.1995**

(54) **Optische Anordnung aus streifenförmigen optischen Wellenleitern**

Optical device having strip optical waveguides

Dispositif optique comprenant de guides d'onde optiques en ruban

(84) Benannte Vertragsstaaten:
**DE FR GB SE**

(30) Priorität: **11.01.1994 DE 4400554**

(43) Veröffentlichungstag der Anmeldung:
**12.07.1995 Patentblatt 1995/28**

(73) Patentinhaber: **SIEMENS AKTIENGESELLSCHAFT**
**80333 München (DE)**

(72) Erfinder: **März, Reinhard, Dr.**
**D-81667 München (DE)**

(56) Entgegenhaltungen:
**EP-A- 0 444 817**

- **PATENT ABSTRACTS OF JAPAN vol. 18, no. 146 (P-1707) 10. März 1994 & JP-A-05 323 246 (NTT) 7. Dezember 1993**

**Beschreibung**

Die Erfindung betrifft eine optische Anordnung aus mehreren streifenförmigen optischen Wellenleitern nach dem Oberbegriff des Patentanspruchs 1.

Eine Anordnung der genannten Art ist aus JP-A-5 323 246 bekannt. Ein Phased array, das als transmittierendes optisches Phasengitter verwendbar ist, ist aus Electronics Letters 24 (1988), Seiten 385 bis 386, aus Electronics Letters 18, Januar 1990, Vol. 26, Nr. 2, Seiten 87 bis 88 oder aus der P 40 29 971.6 (GR 90 P 1624 DE) bekannt.

Der im Anspruch 1 angegebenen Erfindung liegt die Aufgabe zugrunde, eine abstimmbare optische Anordnung der genannten Art bereitzustellen.

Durch die Erfindung ist vorteilhafterweise ein abstimmbares integriert-optisches Gitter oder Filter realisiert, das überdies als Einzelbauelement und nicht als Filterkaskade eine große Zahl von Wellenlängenkanälen zu trennen vermag. Die erfindungsgemäße Anordnung kann, bei fester Wellenlänge, vorteilhafterweise auch als 1 × N-Schalter verwendet werden. Die erfindungsgemäße Anordnung ist für WDM-Übertragung, Wellenlängenvermittlung, Wellenlängenkonversion einsetzbar.

Bevorzugte und vorteilhafte Ausgestaltungen der erfindungsgemäßen Anordnung gehen aus den Unteransprüchen hervor.

Die Erfindung wird in der nachfolgenden Beschreibung anhand der Figuren beispielhaft näher erläutert. Es zeigen:

Figur 1      ein Ausführungsbeispiel eines erfindungsgemäßen Gitters in Draufsicht,

Figur 2      in vergrößerter Darstellung eine Einkoppeleinrichtung des Gitters nach Figur 1 zum Einkoppeln einer optischen Welle in das Gitter,

Figur 3      in vergrößerter Darstellung eine Auskoppeleinrichtung des Gitters nach Figur 1 zum Auskoppeln optischer Wellen aus dem Gitter,

Figur 4      den die erfindungswesentlichen Phasenschiebereinrichtungen des Gitters in bestimmter Ausführungsform enthaltenden, gestrichelt umrahmten Bereich A der Figur 1 in vergrößerter Darstellung,

Figur 5      den Bereich A der Figur 1 in vergrößerter Darstellung aber mit einer modifizierten Ausbildung der Phasenschiebereinrichtungen,

Figuren 6a bis 6c      in einem Querschnitt längs der Linie I-I in Figur 4 oder 5 drei verschiedene Realisierungsmöglichkeiten einer Phasenschiebereinrichtung der erfindungsgemäßen Anordnung, und

Figur 7      die optischen Wellenleiter des Gitters nach Figur 1 geradlinig gestreckt und parallel nebeneinander angeordnet, so daß ihre unterschiedliche optische Länge deutlich sichtbar ist.

Die Figuren sind nicht maßstäblich und schematisch.

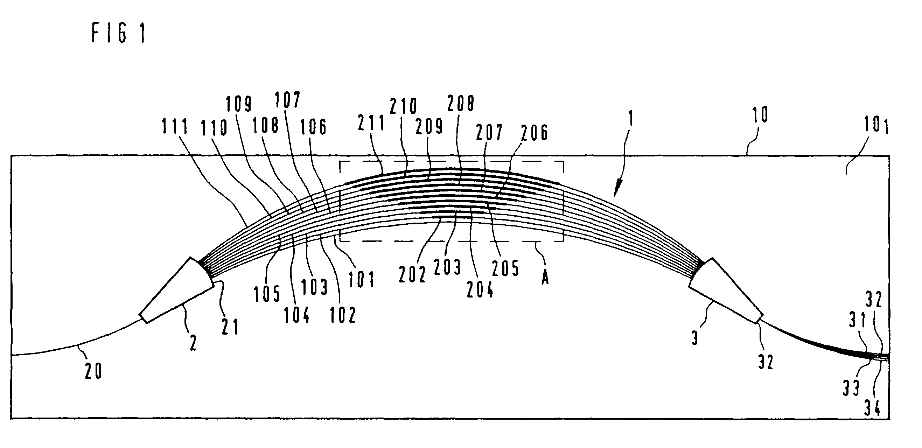

In der Figur 1 bezeichnet das Bezugszeichen 10 ein Substrat mit einer in der Zeichenebene liegenden Oberfläche $10_1$, auf der die erfindungsgemäße, generell mit 1 bezeichnete und ein transmittierendes optisches Phasengitter bildende erfindungsgemäße Anordnung integriert ist.

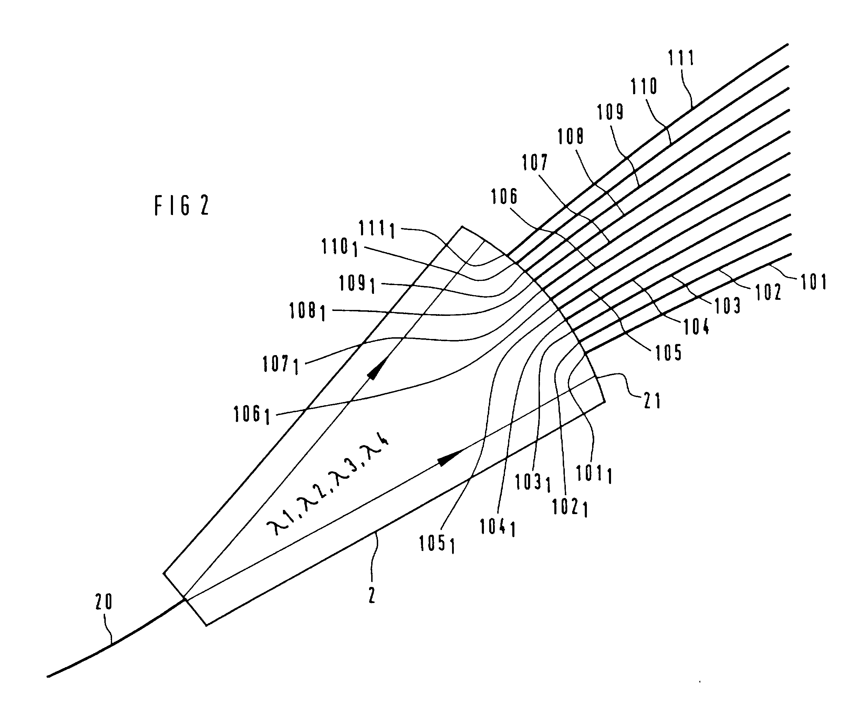

Die Anordnung 1 besteht im wesentlichen aus mehreren, ein Phased array bildenden streifenförmigen optischen Wellenleitern 101, 102,...bzw. 111, deren jeder ein optisches Eingangstor $101_1$, $102_1$,...bzw. $111_1$ (siehe Figuren 2, 3 und 7) der Anordnung 1 mit je einem diesem Wellenleiter 101, 102,...bzw. 111 allein zugeordneten optischen Ausgangstor $101_2$, $102_2$,...bzw. $111_2$ dieser Anordnung verbindet.

Jeder Wellenleiter 101, 102,...bzw. 111 weist zwischen seinem Eingangstor $101_1$, $102_1$,...bzw. $111_1$ und Ausgangstor $101_2$, $102_2$,...bzw. $111_2$ eine bestimmte Weglänge L, $L + \Delta L_1$, ..bzw. $L + \Delta L_{10}$ derart auf, daß beispielsweise die Weglängen L bis $L + \Delta L_{10}$ aller Wellenleiter 101 bis 111, wie bei herkömmlichen Wellenleiter-Phasengittern, voneinander verschieden sind.

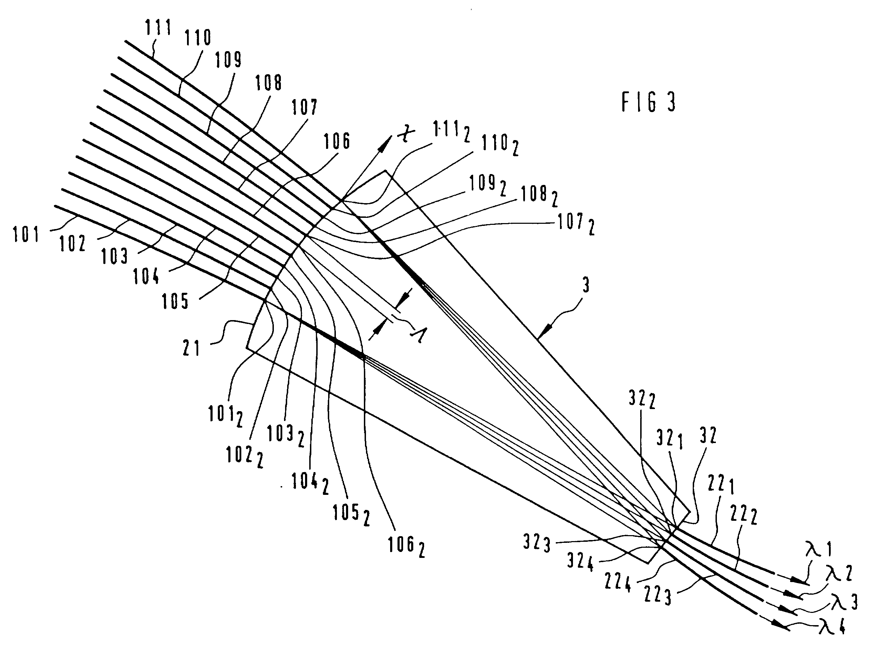

Die Ausgangstore $101_2$ bis $111_2$ sind in einem derart geringen, eine Gitterkonstante des durch die Anordnung 1 gegebenen Gitters bildenden räumlichen Abstand $\Lambda$ (siehe Figur 3) nebeneinander angeordnet, daß in den Wellenleitern 101 bis 111 geführte und über die Ausgangstore $101_2$ bis $111_2$ ausgekoppelte optische Wellen kohärent einander überlagert sind.

Bei der Anordnung 1 nach Figur 1 sind beispielsweise 11 Wellenleiter 101 bis 111 vorhanden. Die Anzahl der Wellenleiter ist nicht auf 11 beschränkt, sondern kann eine weitgehend beliebige ganze Zahl a größer oder kleiner 11 sein.

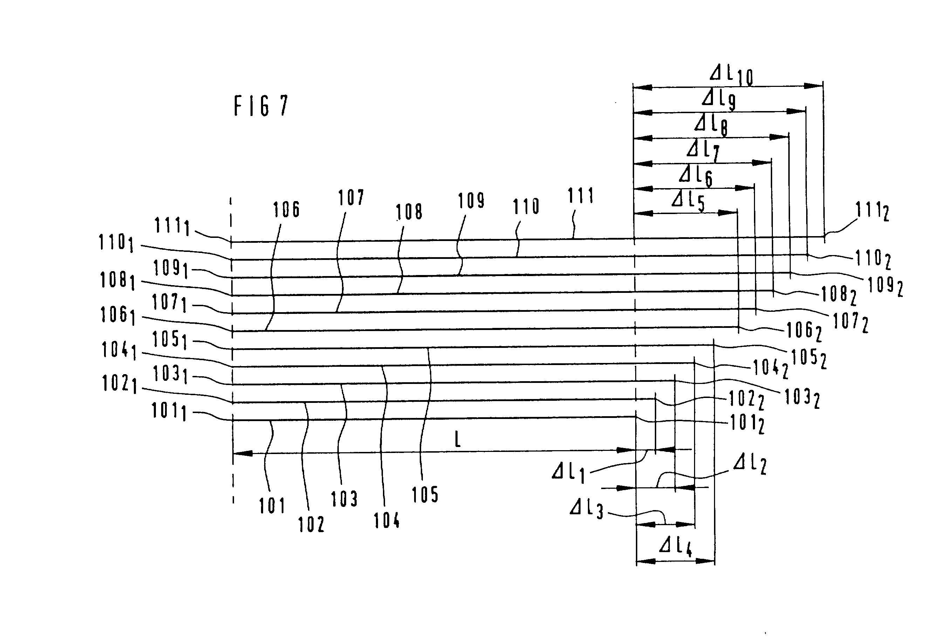

Gebräuchlich sind Anordnungen 1, die eine konstante Phasenverschiebung $\Delta\Phi$ zwischen je zwei benachbarten Wellenleitern 101 bis 111 erzeugen, beispielsweise dadurch, daß die Weglänge von Wellenleiter zu Wellenleiter um einen konstanten Betrag AL zunimmt, beispielsweise derart, daß die Wellenleiter 101 bis 111 der Reihe nach die Weglänge L, L + $\Delta L_1$ = L + $\Delta L$, L + $\Delta L_2$ = L + 2$\Delta L$, L + $\Delta L_3$ = L + 3$\Delta L$,...L + $\Delta L_{11}$ = L + 11$\Delta L$, oder allgemein, L + $\Delta L_a$ = L + a$\Delta L$ aufweisen, so wie es in der Figur 7 dargestellt ist.

Für eine derartige Anordnung 1 in Form eines Gitters mit einer Gitterkonstanten $\Lambda$, das in der m-ten (m = ± 1, ± 2, ± 3,...) Beugungsordnung betrieben wird, wächst in bezug auf den Wellenleiter 101 mit der kürzesten Weglänge L die Phasenverschiebung $\Delta\Phi$ in einem Wellenleiter linear mit dem Abstand x dieses Wellenleiters zum Wellenleiter 101 mit dieser kürzesten Weglänge L gemäß

$$\Delta\Phi(x) = 2\pi m\lambda/\lambda_o(x/\Lambda)$$

an. $\lambda_o$ bedeutet eine Designwellenlänge, bei der die Phasenverschiebung $\Delta\Phi$ zwischen zwei benachbarten Wellenleitern gerade $2\pi m$ beträgt.

Ein derartiges Gitter kann erfindungsgemäß durch das Vorsehen einer zusätzlichen, vorzugsweise konstanten Phasenverschiebung zwischen je zwei benachbarten Wellenleitern abgestimmt werden. Die optischen Abbildungseigenschaften werden durch diese Maßnahme vorteilhafterweise nicht beeinflußt.

Zur Erzeugung einer zusätzlichen Phasenverschiebung weist erfindungsgemäß zumindest einer der Wellenleiter der erfindungsgemäßen Anordnung, im Fall der Anordnung 1 nach Figur 1 zumindest einer der Wellenleiter 101 bis 111, eine steuerbare Phasenschiebereinrichtung zur gesteuerten Erzeugung einer Phasenverschiebung einer in diesem Wellenleiter geführten optischen Welle auf. Vorzugsweise weisen zwei oder mehrere benachbarte der Wellenleiter 101 bis 111 je eine unabhängig steuerbare Phasenschiebereinrichtung zur gesteuerten Erzeugung einer Phasenverschiebung einer in diesem Wellenleiter geführten optischen Welle auf.

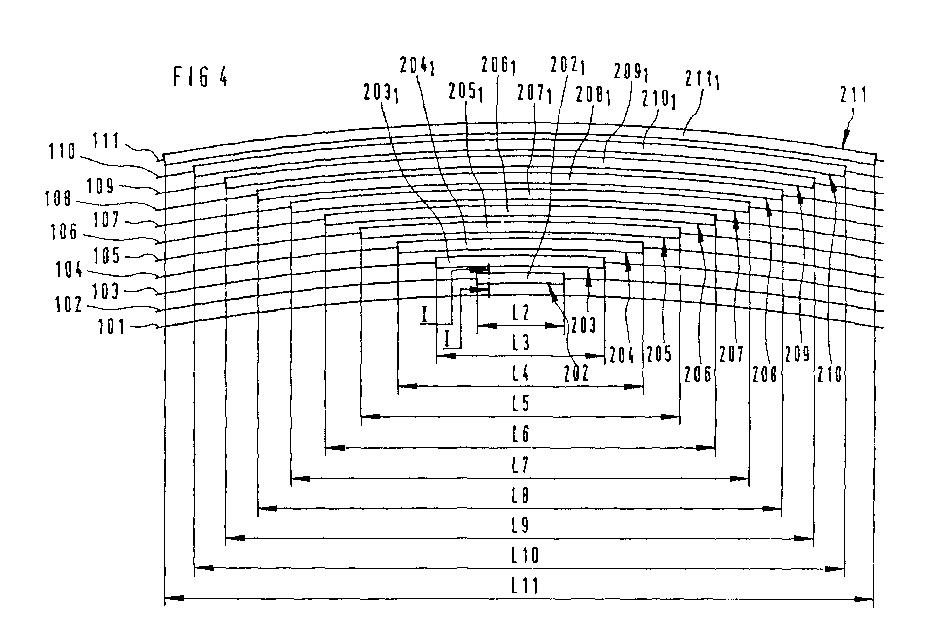

Bei der Anordnung 1 nach Figur 1 ist es beispielsweise so eingerichtet, daß mit Ausnahme des Wellenleiters 101 mit der vergleichsweise kürzesten Weglänge L jeder übrige Wellenleiter 102, 103,...bzw. 111 je eine Phasenschiebereinrichtung 202, 203,...bzw. 211 (siehe auch Figur 4) zur gesteuerten Erzeugung einer Phasenverschiebung $\Delta\Phi$ einer in diesem Wellenleiter 102, 103,...bzw. 111 geführten optischen Welle aufweist.

Die Phasenschiebereinrichtungen der verschiedenen Wellenleiter sind vorzugsweise so ausgebildet, daß sie eine von Wellenleiter zu Wellenleiter konstante Phasenverschiebung erzeugen. Im einfachsten Fall werden zur Abstimmung nur baulich gleichartige Phasenschiebereinrichtungen mit jeweils gleichem Betriebszustand verwendet, die eine gleiche Änderung $\Delta n$ der effektiven Brechzahl n der Wellenleiter erzeugen. Die Phasenverschiebung $\Delta\Phi$ eines derartigen Gitters in der m-ten Beugungsordnung ist

$$\Delta\Phi(x) = 2\pi(m + \Delta n/\Delta n_{2\pi}) (\lambda/\lambda o) (x/\Lambda),$$

wobei $\Delta n_{2\pi}$ die Brechzahländerung ist, die eine zusätzliche Phasenverschiebung um $2\pi$ zwischen zwei benachbarten Wellenleitern bewirkt. Um diese Phasenverschiebung von $2\pi$ zu bewirken, muß die Phasenverschiebereinrichtung die Brechzahländerung $\Delta n_{2\pi}$ auf einer Länge $L_{2\pi}$ des betreffenden Wellenleiters erzeugen, die durch

$$L_{2\pi} = \lambda_o/\Delta n_{2\pi}$$

gegeben ist. Vorzugsweise wird die durch Abstimmung erreichbare zusätzliche Phasenverschiebung gleich $2\pi$ gewählt.

Beim der Anordnung 1 nach Figur 1 ist es beispielsweise so eingerichtet, daß die von den Phasenschiebereinrichtungen 202. bis 211 jeweils erzeugten zusätzlichen Phasenverschiebungen von der Phasenschiebereinrichtung 202 des Wellenleiters 102 bis zur Phasenschiebereinrichtung 211 des Wellenleiters 111 kontinuierlich derart zunehmen, daß sich die zusätzlichen Phasenverschiebungen von Wellenleiter zu Wellenleiter um $2\pi$ unterscheiden.

Bevor auf eine konkrete Ausbildung der Phasenschiebereinrichtungen 202 bis 211 der Anordnung 1 nach Figur 1 näher eingegangen wird, sei zunächst diese Anordnung 1 generell beschrieben.

Eine in die Anordnung 1 einzukoppelnde optische Welle wird in einen auf der Oberfläche $10_1$ des Substrats 10 integrierten Wellenleiter 20 eingekoppelt und in diesem Wellenleiter einem ebenfalls auf der Oberfläche $10_1$ des Substrats 10 integrierten Schichtwellenleiter 2 zugeführt, der diese eingekoppelte Welle in der Ebene der Oberfläche $10_1$ des Substrats 10 räumlich aufweitet und leistungsanteilmäßig auf die Eingangstore $101_1$ bis $111_1$ der Wellenleiter 101 bis 111 der Anordnung 1 verteilt, so daß über jedes Eingangstor $101_1$, $102_1$, ... bzw. $111_1$ je ein Anteil der in der aufgeweiteten Welle enthaltenen optischen Leistung in den dieses Eingangstor $101_1$, $102_1$ bzw. $111_1$ aufweisenden Wellenleiter 101, 102, ... bzw. 111 der Anordnung 1 eingekoppelt wird.

Der eingangsseitige Schichtwellenleiter 2 ist in der Figur 2 vergrößert dargestellt. Dieser Figur 2 ist zu entnehmen, daß die in der Ebene der Oberfläche $10_1$ des Substrats 10 liegenden Eingangstore $101_1$ bis $111_1$ der Wellenleiter 101 bis 111 durch Enden dieser Wellenleiter 101 bis 111 gebildet sind, die an eine Stirnfläche 21 des eingangsseitigen Schichtwellenleiters 2, über welcher die in der aufgeweiteten Welle enthaltene optische Leistung verteilt ist, angrenzen.

An die in der Ebene der Oberfläche $10_1$ des Substrats 10 liegenden Ausgangstore $101_2$ bis $111_2$ der Wellenleiter 101 bis 111 des Gitters bzw. der Anordnung 1 ist ein auf der Oberfläche $10_1$ des Substrats 10 integrierter ausgangsseitiger Schichtwellenleiter 3 gekoppelt, der zum Führen der aus den Ausgangstoren $101_2$ bis $111_2$ ausgekoppelten und einander kohärent überlagerten optischen Wellen zu einer von den Ausgangstoren $101_2$ bis $111_2$ abgekehrten Randfläche 32 dieses ausgangsseitigen Schichtwellenleiters 3 dient.

Der ausgangsseitige Schichtwellenleiter 3 ist in der Figur 3 vergrößert dargestellt. Aus dieser Figur 3 ist zu entnehmen, daß der ausgangsseitige Schichtwellenleiter 3 eine den Ausgangstoren $101_2$ bis $111_2$ der Wellenleiter 101 bis 111 zugekehrte Stirnfläche 31 aufweist. Die Ausgangstore $101_2$ bis $111_2$ sind durch die an diese Stirnfläche 31 angrenzenden Enden der Wellenleiter 101 bis 111 definiert.

Die von den Ausgangstoren $101_2$ bis $111_2$ abgekehrte Randfläche 32 des ausgangsseitigen Schichtwellenleiters 3 verläuft durch definierte, in der Ebene der Oberfläche $10_1$ des Substrats 10 liegende Fokuspunkte $32_1$, $32_2$, $32_3$, $32_4$, auf die voneinander verschiedene bestimmte optische Wellenlängen $\lambda_1$, $\lambda_2$, $\lambda_3$, $\lambda_4$ vom Gitter 1 fokussiert werden. In diesen Fokuspunkten $32_1$ bis $32_4$ sind fortführende optische Wellenleiter $22_1$, $22_2$, $22_3$, $22_4$ zum Fortführen der auf diese Fokuspunkte $32_1$ bis $32_4$ fokussierten optischen Wellenlängen $\lambda_1$ bis $\lambda_4$ an die Randfläche des ausgangsseitigen Schichtwellenleiters 3 angekoppelt. Auch diese Wellenleiter $22_1$ bis $22_4$ sind auf der Oberfläche $10_1$ des Substrats 10 integriert.

Bei der Anordnung 1 nach Figur 1 sind vier Fokuspunkte, die vier verschiedenen Wellenlängen zugeordnet sind, und vier fortführende Wellenleiter gegeben. Dies ist nur ein Beispiel. Die Anzahl der verchiedenen Wellenlängen und damit Fokuspunkte kann je nach Anwendung jeweils großer oder kleiner als 4 gewählt werden. Dies gilt dann auch für die fortführenden Wellenleiter.

Eine Phasenschiebereinrichtung 202, 203, ... bzw. 211 ist vorteilhafterweise so realisiert, daß der betreffende Wellenleiter 102, 103, ... 111, dem diese Phasenschiebereinrichtung 202, 203, ... bzw. 211 zugeordnet ist, ein Material mit einer durch eine bestimmte physikalische Größe veränderbare Brechzahl $n_0$ aufweist, und daß diese Phasenschiebereinrichtung 201, 202, ... bzw. 210 eine Einrichtung zur Erzeugung und gesteuerten Veränderung dieser physikalischen Größe aufweist.

Bei dem in den Figuren 1 und 4 dargestellten Ausführungsbeispiel wird die physikalische Größe beispielsweise längs eines Längsabschnitts L2,...bzw. L11 (siehe Figur 4) des betreffenden Wellenleiters 102, 103,...111 erzeugt, wobei längs dieses Längsabschnitts L1, L2,...bzw. L11 die effektive Brechzahl n dieses Wellenleiters 102, 103,...111 durch diese physikalische Größe veränderbar ist.Eine größere Länge des Längsabschnitts bedeutet bei konstanter Brechzahländerung An pro Längeneinheit eine größere Phasenverschiebung über dem Längsabschnitt.

Die Länge der Längsabschnitte L2 bis L11 nimmt unter dieser Voraussetzung vom Wellenleiter 102 bis zum Wellenleiter 111 kontinuierlich beispielsweise derart zu, daß sich die Längsabschnitte jeweils benachbarter Wellenleiter um $L_{2\pi} = \lambda o/\Delta n_{2\pi}$ voneinander unterscheiden, wobei $\Delta n_{2\pi}$ für alle Wellenleiter 102 bis 111 gleich ist. In diesem Fall sind die Längsabschnitte L2 bis L11 gegeben durch $L2 = L_{2\pi}$, $L3 = 2L_{2\pi}$,...$L11 = 10L_{2\pi}$, oder allgemein, $La = aL_{2\pi}$, wobei der erste Wellenleiter 101 keine Phasenschiebereinrichtung aufweist, so daß $L1 = 0$ gilt. Die Differenz zwischen den Längsabschnitten benachbarter Wellenleiter beträgt in diesem Fall jeweils $L_{2\pi}$.

Zur Erzeugung der zusätzlichen Phasenverschiebung in den Wellenleitern der erfindungsgemäßen Anordnung eignen sich grundsätzlich sämtliche Effekte, die in refraktiven optischen Schaltern zum Einsatz kommen. Insbesondere sind dies

- der elektrooptische Effekt, der beispielsweise in $LiNbO_3$, Kunststoffen oder III-V-Halbleitern, beispielsweise InGaAsP/InP oder GaAlAs/GaAs, auftritt und bei dem eine Brechzahländerung durch ein elektrisches Feld E hervorgerufen wird,
- die Ladungsträgerinjektion I in III-V-Halbleitern, beispielsweise InGaAsP/InP oder GaAlAs/GaAs, wobei die Brechzahländerung durch die Größe der Injektion I bestimmt ist, und
- der thermooptische Effekt, der beispielsweise im Materialsystem Glas auf Silizium auftritt und bei dem die Brechzahländerung durch die Temperatur T bestimmt ist.

Bei Einsatz des elektrooptischen Effekts ist die die Brechzahl verändernde physikalische Größe ein elektrisches Feld E, das auf elektrooptisches Material 30 einwirkt und eine Brechzahl $n_0$ dieses Materials 30 verändert. Dazu weist beispielsweise jeder Wellenleiter 102, 103,... bzw. 111 das elektrooptische Material 30 auf und ist beispielsweise jeweils zwischen zwei individuell zugeordneten Elektroden $202_1$, 200; $203_1$, 200;... bzw. $211_1$, 200 angeordnet, zwischen denen eine elektrische Spannung U anlegbar ist, die das elektrische Feld E im Wellenleiter 102, 103,... bzw. 111 erzeugt.

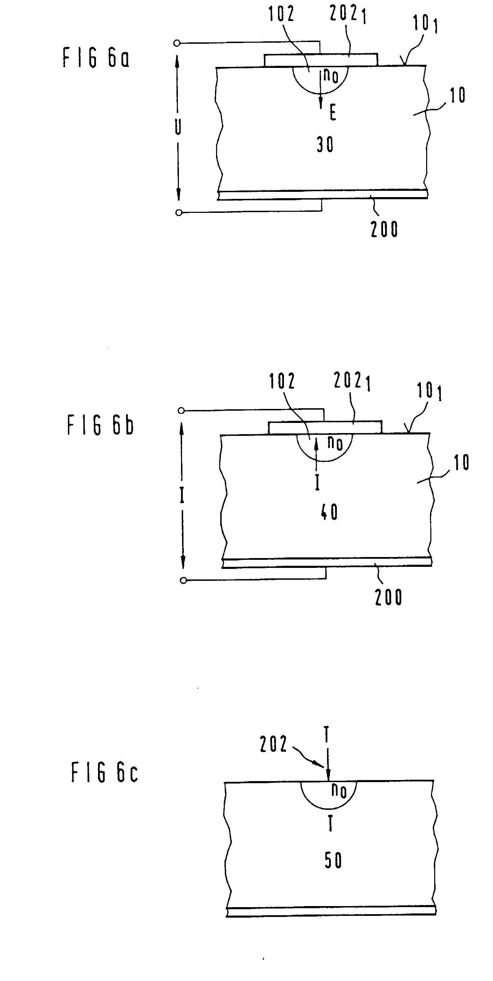

Die Figur 6a zeigt stellvertretend für die übrigen Wellenleiter 103 bis 111 eine entsprechende beispielhafte Anordnung für den Wellenleiter 102 im Schnitt durch diesen Wellenleiter. Auf der Oberfläche $10_1$ des aus elektrooptischem Material 30 bestehenden Substrats 10 ist über dem Wellenleiter 102 die diesem Wellenleiter 102 individuell zugeordnete eine Elektrode $202_1$ angeordnet, während auf der von der Oberfläche $10_1$ abgekehrten Seite des Substrats 10 die diesem zugeordnete andere Elektrode 200 angeordnet ist, die allen Wellenleitern 102 bis 111 gemeinsam zugeordnet sein kann. Die Elektrode 200 kann auch auf der Oberfläche $10_1$ des Substrats 10 angeordnet sein, wobei überdies mehrere, einzelnen Elektroden $202_1$ individuell zugeordnete Elektroden 200 vorgesehen sein können.

Ist die die Brechzahländerung erzeugende physikalische Größe die Größe einer Ladunsträgerinjektion I in ein für diese Injektion geeignetes Material 40, weist jeder Wellenleiter 102, 103,... bzw. 111 das für die Ladungsträgerinjektion I geeignete Material 40 auf und ist beispielsweise jeweils zwischen zwei individuell zugeordneten Elektroden $202_1$, 200; $203_1$, 200; ... bzw. $211_1$, 200 angeordnet, zwischen denen eine Stromquelle schaltbar ist,durch welche die Ladunsträgerinjektion I im Wellenleiter 102, 103,... bzw. 111 erzeugbar ist.

Die Figur 6b zeigt stellvertretend für die übrigen Wellenleiter 103 bis 111 eine entsprechende Anordnung für den Wellenleiter 102 im Schnitt durch diesen Wellenleiter. Auf der Oberfläche 101 des aus III-V-Halbleitermaterial 40 bestehenden Substrats 10 ist über dem Wellenleiter 102 die diesem Wellenleiter 102 individuell zugeordnete eine Elektrode $202_1$ angeordnet, während auf der von der Oberfläche $10_1$ abgekehrten Seite des Substrats 10 die diesem zugeordnete andere Elektrode 200 angeordnet ist, die allen Wellenleitern 102 bis 111 gemeinsam zugeordnet sein kann.

Wenn die die Brechzahl verändernde physikalische Größe die Temperatur ist, weist jeder Wellenleiter 102, 103,... bzw. 111 thermooptisches Material 50 auf und jede Phasenschiebereinrichtung besteht aus einer Einrichtung, welche die Temperatur T im thermooptischen Material 50 und damit eine Brechzahl $n_o$ dieses Materials 50 verändert.

Bei dem Beispiel nach den Figuren 1 und 4 sind die den einzelnen Wellenleitern 102, 103,...bzw. 111 zugeordneten beiden Elektroden $202_1$, 200; $203_1$, 200;... bzw. $211_1$, 200 so ausgebildet,daß die von ihnen im betreffenden Wellenleiter 102, 103,...bzw. 111 erzeugte physikalische Große E, I oder T kontinuierlich auf der ganzen Länge des Langsabschnitts L2, L3,...bzw. L11 auf den betreffenden Wellenleiter 102, 103,...bzw. 111 einwirkt.

Eine derartige kontinuierliche Einwirkung längs eines Wellenleiters zur Erzeugung einer gewünschten Brechzahländerung ist nicht erforderlich, sondern kann auch diskontinuierlich derart erfolgen, daß zur Erzeugung dieser Brechzahländerung die physikalische Große in räumlich voneinander getrennten Abschnitten dieses Wellenleiters einwirkt.

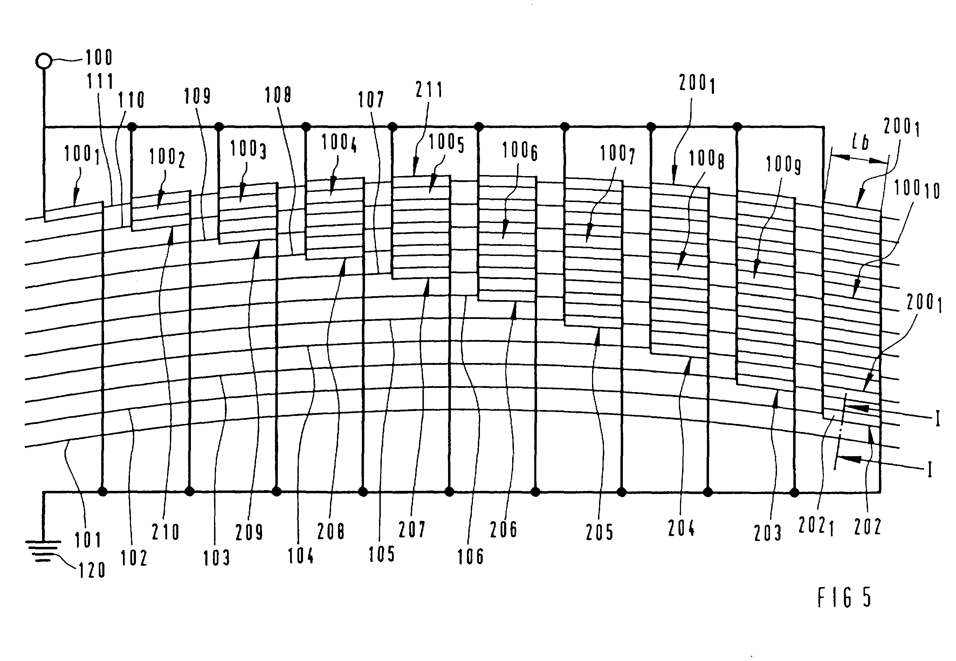

Die Figur 5 zeigt ein Beispiel für eine derartige diskontinuierliche Anordnung, die ein Äquivalent zur Anordnung nach Figur 4 ist. Nach Figur 5 ist die Phasenschiebereinrichtung 202, 203,... bzw. 211 jedes Wellenleiters 102, 103,... bzw. 111 in einen oder mehrere getrennte Abschnitte $200_1$ gleicher Länge $L_{2\pi}$ aufgeteilt, so daß jeder Wellenleiter 102, 103,... bzw. 111 bis 10 jeweils eine Anzahl Abschnitte $200_1$ gleicher Länge $L_{2\pi}$ derart aufweist, daß sich die Anzahl Abschnitte $200_1$ zweier benachbarter der Wellenleiter 102 bis 111 jeweils um einen Abschnitt $200_1$ voneinander unterscheiden und die Länge $L_{2\pi}$ gleich der Länge ist, um die sich die Phasenschiebereinrichtungen benachbarter Wellenleiter jeweils in der Einwirkungslänge voneinander unterscheiden. Die Anzahl Abschnitte $200_1$ nimmt vom Wellenleiter 102 bis zum Wellenleiter 111 kontinuierlich von 1 bis 10 zu und entspricht in dieser Reihenfolge den Längsabschnitten 202 bis 211 nach Figur 4, so wie es in der Figur 5 angedeutet ist.

Bei Einsatz des elektrooptischen Effekts oder der Ladungsträgerinjektion kann jeder Abschnitt $200_1$ eine der Elektrode $202_1$ nach Figur 6a bzw. 6b entsprechende Elektrode aufweisen, unter der das elektrooptische Material bzw. III-V-Halbleitermaterial angeordnet ist. Es können in diesem Fall vorteilhafterweise die Elektroden der Abschnitte $200_1$ der verschiedenen Wellenleiter 102 bis 111 gruppenweise parallel zwischen einen Steuerkontakt 100 und Masse 120 geschaltet werden, daß zu einer Abstimmung nur dieser eine Steuerkontakt 100 benötigt wird.

Nach Figur 5 sind beispielsweise zwischen dem Steuerkontakt 100 und Masse 120 parallel 10 Gruppen aus Abschnitten $200_1$ geschaltet, die eine voneinander verschiedene, von 1 bis 10 reichende Anzahl Abschnitte $200_1$ aufweisen. Vorteilhafterweise sind bei dieser Anordnung die dem Steuerkontakt 100 zugeordneten Elektroden und die der Masse 120 zugeordneten Elektroden auf der gleichen Seite des Substrats angeordnet.

Generell wird die Abstimmgeschwindigkeit der erfindungsgemäßen Anordnung in erster Linie durch die Wahl des die Brechzahl ändernden Effekts beeinflußt. Sie reicht von Millisekunden beim thermooptischen Effekt in Gläsern bis zu Nanosekunden oder noch kleineren Abstimmzeiten bei Nutzung des elektrooptischen Effekts oder der Ladungsträgerinjektion.Derzeit sind weltweit optische Schalter verfügbar, die für die kleinste Phasenschiebereinrichtung eine Länge $L_{2\pi}$ von 3 mm für thermo optisches Schalten in Glas auf Silizium und von 400 µm in In-GaAsP/InP erwarten lassen. Damit lassen sich bei akzeptablen Chipflächen bei einer Länge von etwa 70 mm in Glas auf Silizium bzw. 10 mm in InGaAsP/InP abstimmbare Gitter mit 16 Kanälen bei beliebigem Kanalabstand realisieren. Zu erwartende Vergrößerungen des refraktiven Schalteffekts durch besser gestaltete Schaltregionen kommen dem erfindungsgemäßen abstimmbaren Gitter zugute. Gitter für 32 Wellenlängenkanäle erscheinen in naher Zukunft durchaus realisierbar.

Die erfindungsgemäße Anordnung läßt sich für den gesamten freien Spektralbereich abstimmen, wenn die dafür nötige Brechzahländerung $\Delta n_{2\pi}$ erreicht wird. Die Zahl der überstrichenen Wellenlängenkanäle entspricht dann ungefähr der Zahl der Wellenleiter der Anordnung.

Die erfindungsgemäße Anordnung kann als optisches Filter, bei einer festen Wellenlänge auch als 1xN-Schalter genutzt werden.

Die erfindungsgemäße Anordnung kann ohne einschneidende Änderung der Funktionalität vorteilhafterweise wie folgt variiert werden:

• Die Phasenschiebereinrichtungen können entlang der Wellenleiter verschoben angeordnet werden, ohne daß das Abstimmverhalten des gesamten Gitters oder Filters beeinflußt wird.

- Neben der Länge der Phasenschiebereinrichtungen kann auch die Brechzahländerung $\Delta n$ von Phasenschiebereinrichtung zu Phasenschiebereinrichtung variiert werden, beispielsweise sogar derart, daß die Länge der Phasenschiebereinrichtung gleich, aber $\Delta n$ von Phasenschiebereinrichtung zu Phasenschiebereinrichtung verschieden ist.
- Die Abstimmung von Gittern oder Filtern mit komplizierterem Phasengang ist durch geeignet dimensionierte Phasenschiebereinrichtungen ebenfalls möglich.
- Die elektrischen Zuführungen zu den Phasenschiebereinrichtungen können wahlweise einzeln oder gemeinsam ausgeführt werden.

**Patentansprüche**

1. Optische Anordnung (1), bestehend aus zwei oder mehreren streifenförmigen optischen Wellenleitern (101, 102, . . .111), deren jeder ein optisches Eingangstor ($101_1$, $102_1$,...$111_1$) der Anordnung (1) mit je einem diesem Wellenleiter (101, 102,...111) allein zugeordneten optischen Ausgangstor ($101_2$, $102_2$,...$111_2$) der Anordnung (1) optisch verbindet und eine bestimmte Weglänge (L,L + $\Delta L_1$,...L + $\Delta L_{10}$) zwischen dem Eingangstor ($101_1$, $102_1$,... $111_1$) und zugeordneten Ausgangstor ($101_2$, $102_2$,...$111_2$) derart aufweist, daß die Weglänge (L, L + $\Delta L_1$,...L + $\Delta L_{10}$) zumindest zweier Wellenleiter (101, 102,...111) verschieden ist, wobei die Ausgangstore ($101_2$, $102_2$,...$111_2$) in einem derart geringen räumlichen Abstand ($\Lambda$) nebeneinander angeordnet sind, daß in den Wellenleitern (101, 102,... 111) geführte und über die Ausgangstore ($101_2$, $102_2$,...$111_2$) ausgekoppelte optische Wellen kohärent einander überlagert sind, wobei zumindest zwei benachbarte Wellenleiter (102, 103,... 111) je eine steuerbare Phasenschiebereinrichtung (202, 203 ... 211) zur gesteuerten Erzeugung einer Phasenverschiebung einer in diesen Wellenleitern (102, 103, ... 111) geführten optischen Welle aufweisen, **dadurch gekennzeichnet**, daß die Phasenschiebereinrichtungen (202, 203, ..., 211) unabhängig steuerbar sind.

2. Anordnung nach Anspruch 1, **dadurch gekennzeichnet,** daß die Phasenschiebereinrichtungen (202, 203,... 211) verschiedener Wellenleiter (102, 103,... 111) eine von Wellenleiter zu Wellenleiter verschiedene Phasenverschiebung erzeugen.

3. Anordnung nach Anspruch 2, **dadurch gekennzeichnet,**

daß die Wellenleiter (101, 102,... 111) eine von Wellenleiter zu Wellenleiter verschiedene Weglänge (L, L + $\Delta L_1$,...L + $\Delta L_{10}$) aufweisen.

4. Anordnung nach einem der vorhergehenden Ansprüche, **dadurch gekennzeichnet,** daß ein eine Phasenschiebereinrichtung (202, 203,... 211) aufweisender Wellenleiter (102, 103,... 111) ein Material (20; 30; 40) mit einer durch eine bestimmte physikalische Größe (E;I;T) veränderbaren Brechzahl in) aufweist, und daß diese Phasenschiebereinrichtung (201, 202,...bzw. 210) eine Einrichtung ($202_1$, 200; $203_1$, 200;... $211_1$, 200) zur Erzeugung und gesteuerten Veränderung dieser physikalischen Größe (E; I; T) aufweist.

5. Anordnung nach Anspruch 2 oder 3 und 4, **dadurch gekennzeichnet,** daß die Einrichtung ($202_1$, 200; $203_1$, 200;... $211_1$, 200) zur Erzeugung und gesteuerten Veränderung der physikalischen Größe jedes eine Phasenschiebereinrichtung (202, 203,... 211) aufweisenden Wellenleiters (102, 103,... 111) diese physikalische Größe (E; I; T) längs eines oder mehrerer Längsabschnitte ($L_2$, $L_3$, ...$L_{11}$) der Weglänge (L, L + $\Delta L_1$,... L + $\Delta L_{10}$) dieses Wellenleiters (102, 103,... 111) erzeugt, längs denen die Brechzahl (n) dieses Wellenleiters (102, 103,... 111) durch diese physikalische Größe (E; I; T) veränderbar ist, und daß die Gesamtlänge dieser Längsabschnitte ($L_2$, $L_3$, ... $L_{11}$) eines Wellenleiters (102, 103,... 111) von Wellenleiter zu Wellenleiter verschieden ist.

6. Anordnung nach Anspruch 4 oder 5, **dadurch gekennzeichnet,** daß ein eine Phasenschiebereinrichtung (202, 203,...211) aufweisender Wellenleiter (102, 103,... 111) elektrooptisches Material (30) aufweist, und daß die Phasenschiebereinrichtung (202, 203,... 211) eine Einrichtung ($202_1$, 200; $203_1$, 200;... $211_1$, 200) zur Erzeugung und gesteuerten Veränderung eines elektrischen Feldes (E) im elektrooptischen Material (20) aufweist.

7. Anordnung nach Anspruch 6, **dadurch gekennzeichnet,** daß die Einrichtung zur Erzeugung und gesteuerten Veränderung des elektrischen Feldes (E) Elektroden ($202_1$, 200; $203_1$, 200;... $211_1$, 200) aufweist, zwischen denen das elektrooptische Material (30) angeordnet und eine elektrische Spannung (U) anlegbar ist.

8. Anordnung nach einem der Ansprüche 4 bis 7, **dadurch gekennzeichnet,** daß ein eine Phasenschiebereinrichtung (202, 203,... 211) aufweisender Wellenleiter (102, 103, ...

111) ein zu einer elektrischen Ladungsträgerinjektion (I) geeignetes Material (40) aufweist, und daß diese Phasenschiebereinrichtung (202, 203,... 211) eine Einrichtung (202$_1$, 200; 203$_1$, 200;... 211$_1$, 200) zur Erzeugung und gesteuerten Veränderung der Ladungsträgerinjektion (I) in das für diese Injektion (I) geeignete Material (40) aufweist.

9. Anordnung nach einem der Ansprüche 4 bis 8,
**dadurch gekennzeichnet,**
daß ein eine Phasenschiebereinrichtung (202, 203,... 211) aufweisender Wellenleiter (102, 103,... 111) thermooptisches Material (50) aufweist, und daß diese Phasenschiebereinrichtung (202, 203,... 211) eine Einrichtung (202$_1$, 200; 203$_1$, 200;... 211$_1$, 200) zur Erzeugung und gesteuerten Veränderung einer Temperatur im thermooptischen Material (50) aufweist.

10. Anordnung nach einem der vorhergehenden Ansprüche,
**dadurch gekennzeichnet,**
daß ein eingangsseitiger Schichtwellenleiter (2) vorgesehen ist, in den eine in einem zuführenden optischen Wellenleiter (20) zugeführte optische Welle einkoppelbar ist und der diese eingekoppelte Welle räumlich aufweitet und leistungsanteilmäßig auf die Eingangstore (101$_1$, 102$_1$,... 111$_1$) der Wellenleiter (101, 102,... 111) der Anordnung (1) verteilt, so daß über jedes Eingangstor (101$_1$, 102$_1$,... 111$_1$) je ein Anteil der in der aufgeweiteten Welle enthaltenen optischen Leistung in den dieses Eingangstor (101$_1$, 102$_1$,... 111$_1$) aufweisenden Wellenleiter (101, 102,... 111) der Anordnung (1) eingekoppelt wird.

11. Anordnung nach einem der vorhergehenden Ansprüche,
**dadurch gekennzeichnet,**
daß ein optisch an die Ausgangstore (101$_2$, 102$_2$,... 111$_2$) der Wellenleiter (101, 102,... 111) der Anordnung (1) gekoppelter ausgangsseitiger Schichtwellenleiter (3) zum Führen der aus den Ausgangstoren (101$_2$, 102$_2$,... 111$_2$) ausgekoppelten und einander kohärent überlagerten optischen Wellen zu einer von den Ausgangstoren (101$_2$, 102$_2$,... 111$_2$) abgekehrten Randfläche (32) dieses ausgangsseitigen Schichtwellenleiters (3), die durch Fokuspunkte (32$_1$, 32$_2$,... 32$_4$) verläuft, auf die voneinander verschiedene bestimmte optische Wellenlängen ($\lambda_1$, $\lambda_2$,... $\lambda_4$) von der Anordnung (1) fokussiert werden.

12. Anordnung nach Anspruch 11,
**dadurch gekennzeichnet,**
daß in den Fokuspunkten (32$_1$, 32$_2$,... 32$_4$) fortführende optische Wellenleiter (22$_1$, 22$_2$,... 22$_4$) zum Fortführen der auf diese Fokuspunkte (32$_1$, 32$_2$,...

32$_4$) fokussierten optischen Wellenlängen ($\lambda_1$, $\lambda_2$,... $\lambda_4$) an die Randfläche des ausgangsseitigen Schichtwellenleiters (3) ankoppelbar sind.

13. Anwendung einer Anordnung nach einem der vorhergehenden Ansprüche als abstimmbares optisches Wellenlängenfilter.

14. Anwendung einer Anordnung nach einem der vorhergehenden Ansprüche als optischer Schalter.

**Claims**

1. Optical arrangement (1), comprising two or more optical waveguides (101, 102, ... 111) in strip form, each of which optically connects an optical input port (101$_1$, 102$_1$, ... 111$_1$) of the arrangement (1) to a respective optical output port (101$_2$, 102$_2$, ... 111$_2$) of the arrangement (1), the said output port being assigned solely to this waveguide (101, 102, ... 111), and has a specific path length (L,L + $\Delta L_1$, ... L + $\Delta L_{10}$) between the input port (101$_1$, 102$_1$, ... 111$_1$) and assigned output port (101$_2$, 102$_2$, 111$_2$) in such a way that the path length (L,L + $\Delta L_1$, ... L + $\Delta L_{10}$) of at least two waveguides (101, 102, ... 111) is different, the output ports (101$_2$, 102$_2$, ... 111$_2$) being arranged next to one another with a spatial separation ($\Lambda$) which is small enough that optical waves which are guided in the waveguides (101, 102, ... 111) and are coupled out via the output ports (101$_2$, 102$_2$, ... 111$_2$) are coherently superposed on one another, at least two adjacent waveguides (102, 103, ... 111) each having a controllable phase shifter device (202, 203 ... 211) for the controlled generation of a phase shift of an optical wave that is guided in these waveguides (102, 103 ... 111), characterized in that the phase shifter devices (202, 203, ..., 211) can be controlled independently.

2. Arrangements according to Claim 1, characterized in that the phase shifter devices (202, 203, ... 211) of different waveguides (102, 103, ... 111) generate a phase shift that differs from waveguide to waveguide.

3. Arrangement according to Claim 2, characterized in that the waveguides (101, 102, ... 111) have a path length (L,L + $\Delta L_1$, ... L + $\Delta L_{10}$) that differs from waveguide to waveguide.

4. Arrangement according to one of the preceding claims, characterized in that a waveguide (102, 103, ... 111) having a phase shifter device (202, 203, ... 211) has a material (20; 30; 40) having a refractive index (n) that can be altered by a specific physical quantity (E;I;T), and in that the said phase shifter device (201, 202, ... and 210) has a device ($202_1$, 200; $203_1$, 200; ... $211_1$, 200) for the generation and controlled alteration of this physical quantity (E; I; T).

5. Arrangement according to Claim 2 or 3 and 4, characterized in that the device ($202_1$, 200; $203_1$, 200; ... $211_1$, 200) for the generation and controlled alteration of the physical quantity of each waveguide (102, 103 ... 111) having a phase shifter device (202, 203, ... 211) generates the said physical quantity (E; I; T) along one or more longitudinal sections ($L_2$, $L_3$, ... $L_{11}$) of the path length (L, L + $\Delta L_1$, ... L + $\Delta L_{10}$) of the said waveguide (102, 103 ... 111), along which the refractive index (n) of the said waveguide (102, 103, ... 111) can be altered by the said physical quantity (E; I; T), and in that the total length of these longitudinal sections ($L_2$, $L_3$, ... $L_{11}$) of a waveguide (102, 103, ... 111) differs from waveguide to waveguide.

6. Arrangement according to Claim 4 or 5, characterized in that a waveguide (102, 103 ... 111) having a phase shifter device (202, 203, ... 211) has electro-optical material (30), and in that the phase shifter device (202, 203, ... 211) has a device ($202_1$, 200; $203_1$, 200; ... $211_1$, 200) for the generation and controlled alteration of an electric field (E) in the electro-optical material (20).

7. Arrangement according to Claim 6, characterized in that the device for the generation and controlled alteration of the electric field (E) has electrodes ($202_1$, 200; $203_1$, 200; ... $211_1$, 200) between which the electro-optical material (30) is arranged and an electric voltage (U) can be applied.

8. Arrangement according to one of Claims 4 to 7, characterized in that a waveguide (102, 103, ... 111) having a phase shifter device (202, 203, ... 211) has a material (40) which is suitable for electrical charge carrier injection (I), and in that this phase shifter device (202, 203, ... 211) has a device ($202_1$, 200; $203_1$, 200; ... $211_1$, 200) for the generation and controlled alteration of the charge carrier injection (I) into the material (40) which is suitable for this injection (I).

9. Arrangement according to one of Claims 4 to 8, characterized in that a waveguide (102, 103 ... 111) having a phase shifter device (202, 203, ... 211) has thermo-optical material (50), and in that this phase shifter device (202, 203, ... 211) has a device ($202_1$, 200; $203_1$, 200; ... $211_1$, 200) for the generation and controlled alteration of a temperature in the thermo-optical material (50).

10. Arrangement according to one of the preceding claims,

characterized in that an input-side planar waveguide (2) is provided into which an optical wave, which is fed in in a feeding optical waveguide (20), can be coupled and which spatially expands this coupled-in wave and distributes it power-proportionally between the input ports ($101_1$, $102_1$, ... $111_1$) of the waveguides (101, 102, ... 111) of the arrangement (1), with the result that a proportion of the optical power contained in the expanded wave is respectively coupled via each input port ($101_1$, $102_1$, ... $111_1$) into that waveguide (101, 102, **...** 111) of the arrangement (1) which has the said input port ($101_1$, $102_1$, ... $111_1$).

11. Arrangement according to one of the preceding claims,

characterized in that an output-side planar waveguide (3) which is optically coupled to the output ports ($101_2$, $102_2$, ... $111_2$) of the waveguides (101, 102, ... 111) of the arrangement (1) is provided, for guiding the optical waves, which are coupled out from the output ports ($101_2$, $102_2$, ... $111_2$) and are coherently superposed on one another, to an edge face (32) of the said output-side planar waveguide (3), which edge face is remote from the output ports ($101_2$, $102_2$, ... $111_2$) and runs through focal points ($32_1$, $32_2$, ... $32_4$) onto which mutually different, specific optical wavelengths ($\lambda_1$, $\lambda_2$, ... $\lambda_4$) are focused by the arrangement (1).

12. Arrangement according to Claim 11, characterized in that at the focal points ($32_1$, $32_2$, .. $32_4$), continuing optical waveguides ($22_1$, $22_2$, ..., $22_4$) for the continuation of the optical wavelengths ($\lambda_1$, $\lambda_2$, ... $\lambda_4$) focused onto the said focal points ($32_1$, $32_2$, ... $32_4$) can be coupled onto the edge face of the output-side planar waveguide (3).

13. Application of an arrangement according to one of the preceding claims as a tunable optical wavelength filter.

14. Application of an arrangement according to one of the preceding claims as an optical switch.

**Revendications**

1. Dispositif optique (1), comprenant deux ou plusieurs guides d'onde optiques en ruban (101, 102,..., 111) dont chacun relie une porte d'entrée optique ($101_1$, $102_1$,..., $111_1$) du dispositif (1) à respectivement une porte de sortie optique ($101_2$, $102_2$, ... $111_2$), associée individuellement à ce guide d'onde (101, 102, ... 111), du dispositif (1), et présente une longueur de parcours définie (L, L + $\Delta L_1$,..., L + $\Delta L_{10}$) entre la porte d'entrée ($101_1$, $102_1$, ..., $111_1$) et la porte de sortie ($101_2$, $102_2$,...,

$111_2$) associée, de sorte que la longueur de parcours (L, L + $\Delta L_1$,..., L + $\Delta L_{10}$) d'au moins deux guides d'onde (101, 102,..., 111) est différente, les portes de sortie ($101_2$, $102_2$, ..., $111_2$) étant disposées l'une à côté de l'autre, à une distance spatiale (A) si faible que les ondes optiques guidées dans les guides d'onde (101, 102, ..., 111) et sorties par les portes de sortie ($101_2$, $102_2$, ..., $111_2$) sont superposées l'une à l'autre de manière cohérente, au moins deux guides d'ondes (102, 103,..., 111) voisins comportant respectivement un dispositif de décalage de phase (202, 203, ..., 211) contrôlable permettant la génération contrôlée d'un décalage de phase d'une onde optique guidée dans ces guides d'onde (102, 103, ... 111), caractérisé en ce que les dispositifs de décalage de phase (202, 203, ..., 211) sont contrôlables individuellement.

2. Dispositif selon la revendication 1, caractérisé en ce que les dispositifs de décalage de phase (202, 203,..., 211) de guides d'onde différents (102, 103,..., 111) génèrent un décalage de phase différent de guide d'onde en guide d'onde.

3. Dispositif selon la revendication 2, caractérisé en ce que les guides d'onde (101, 102,..., 111) présentent une longueur de parcours (L, L + $\Delta L_1$, ..., L + $\Delta L_{10}$) différente de guide d'onde en guide d'onde.

4. Dispositif selon l'une quelconque des revendications précédentes, caractérisé en ce qu'un guide d'onde (102, 103,..., 111) comportant un dispositif de décalage de phase (202, 203,..., 211) comporte un matériau (20 ; 30 ; 40) dont l'indice de réfraction (n) est variable par une grandeur physique définie (E ; I; T) et en ce que ce dispositif de décalage de phase (201, 202,... , resp. 210) comporte un système ($202_1$, 200 ; $203_1$, 200 ;..., $211_1$, 200) permettant la génération et la variation contrôlée de cette grandeur physique (E ; I ; T).

5. Dispositif selon la revendication 2 ou 3 et 4, caractérisé en ce que le dispositif ($202_1$, 200 ; $203_1$, 200 ;..., $211_1$, 200) permettant la génération et la variation contrôlée de la grandeur physique de chaque guide d'onde (102, 103, ... 111) comportant un dispositif de décalage de phase (202, 203,... 211), génère cette grandeur physique (E ; I; T) le long d'un ou plusieurs tronçons longitudinaux ($L_2$, $L_3$, ..., $L_{11}$) de longueur de parcours (L, L + $\Delta L_1$,..., L + $\Delta L_{10}$) de ce guide d'onde (102, 103, ..., 111), le long desquels l'indice de réfraction (n) de ce guide d'onde (102, 103, ..., 111) est variable par cette grandeur physique (E ; I; T), et en ce que la longueur totale de ces tronçons longitudinaux ($L_2$, $L_3$, ..., $L_{11}$) d'un guide d'onde (102, 103,..., 111) est différente de guide d'onde en guide d'onde .

6. Dispositif selon la revendication 4 ou 5, caractérisé en ce qu'un guide d'onde (102, 103, ..., 111) comportant un dispositif de décalage de phase (202, 203, ..., 211) comporte un matériau électro-optique (30) et en ce que le dispositif de décalage de phase (202, 203,..., 211) comporte un système ($202_1$, 200 ; $203_1$, 200 ;..., $211_1$, 200) permettant la génération et la variation contrôlée d'un champ électrique (E) dans le matériau électro-optique (20).

7. Dispositif selon la revendication 6, caractérisé en ce que le système de génération et de variation contrôlée du champ électrique (E) comporte des électrodes ($202_1$, 200 ; $203_1$, 200 ;...,$211_1$, 200), entre lesquelles le matériau électro-optique (30) est disposé et une tension électrique (U) est applicable.

8. Dispositif selon l'une des revendications 4 à 7, caractérisé en ce qu'un guide d'onde (102, 103, ..., 111) comportant un dispositif de décalage de phase (202, 203,..., 211) comporte un matériau (40) adapté à une injection électrique de porteurs de charge (I) et en ce que ce dispositif de décalage de phase (202, 203,..., 211) comporte un système ($202_1$, 200 ; $203_1$, 200 ;..., $211_1$, 200) permettant la génération et la variation contrôlée de l'injection de porteurs de charge (I) dans le matériau (40) adapté à cette injection (I).

9. Dispositif selon l'une des revendications 4 à 8, caractérisé en ce qu'un guide d'onde (102, 103,..., 111) comportant un dispositif de décalage de phase (202, 203,..., 211) comporte un matériau thermo-optique (50) et en ce que ce dispositif de décalage de phase (202, 203 211) comporte un système ($202_1$, 200 ; $203_1$, 200 ;..., $211_1$, 200) permettant la génération et la variation contrôlée d'une température dans le matériau thermo-optique (50).

10. Dispositif selon l'une quelconque des revendications précédentes, caractérisé en ce qu'un guide d'onde à couche (2) côté entrée est prévu, dans lequel une onde optique amenée dans un guide d'onde optique d'amenée (20) peut être introduite et qui élargit dans l'espace cette onde introduite et la répartit proportionnellement à la puissance sur les portes d'entrée ($101_1$, $102_1$, ...,$111_1$) des guides d'ondes (101, 102,..., 111) du dispositif (1), de manière à introduire, via chaque porte d'entrée ($101_1$, $102_1$,..., $111_1$), respectivement une portion de la puissance optique contenue dans l'onde élargie dans le guide d'onde (101, 102,..., 111) du dispositif (1), qui comporte cette porte d'entrée ($101_1$, $102_1$,...,$111_1$).

11. Dispositif selon l'une quelconque des revendications précédentes, caractérisé en ce qu'un guide d'onde à couche (3) côté sortie, couplé optiquement aux portes de sortie ($101_2$, $102_2$, ..., $111_2$) des guides d'onde (101,102, ...,111) du dispositif (1), pour guider les ondes optiques sorties par les portes de sortie ($101_2$, $102_2$, ..., $111_2$) et superposées l'une à l'autre de manière cohérente, à une face latérale (32) opposée aux portes de sortie ($101_2$, $102_2$, ..., $111_2$) de ce guide d'onde à couche (3) côté sortie, qui passe par des points focaux ($32_1$, $32_2$,.., $32_4$), sur lesquels des longueurs d'onde optiques définies ($\lambda_1$, $\lambda_2$, ...,$\lambda_4$) différentes l'une de l'autre sont focalisées par le dispositif (1).

12. Dispositif selon la revendication 11, caractérisé en ce que dans les points focaux ($32_1$, $32_2$,.., $32_4$), des guides d'onde optiques de prolongation ($22_1$, $22_2$,..., $22_4$), pour prolonger les longueurs d'onde optiques ($\lambda_1$, $\lambda_2$,..., $\lambda_4$) focalisées sur ces points focaux ($32_1$, $32_2$,..., $32_4$), peuvent être couplés à la face latérale du guide d'onde à couche (3) côté sortie.

13. Utilisation d'un dispositif selon l'une des revendications précédentes comme filtre de longueur d'onde optique réglable.

14. Utilisation d'un dispositif selon l'une des revendications précédentes comme commutateur optique.

FIG 1

FIG 2

FIG 3

FIG 4

FIG 5

FIG 6a

FIG 6b

FIG 6c

16

EP 0 662 621 B1

FIG 7

$\Delta l_{10}$
$\Delta l_9$
$\Delta l_8$
$\Delta l_7$
$\Delta l_6$
$\Delta l_5$

$1111$ 106 107 108 109 110 111 $1112$

$110_1$ $110_2$

$108_1$ $109_1$ $109_2$ $108_2$

$106_1$ $107_1$ $107_2$ $106_2$

$104_1$ $105_1$ $105_2$ $104_2$

$102_1$ $103_1$ $103_2$ $102_2$

$101_1$ $101_2$ $101_2$

L

101 103 105 104 102

$\Delta l_1$ $\Delta l_2$ $\Delta l_3$ $\Delta l_4$